# EUROPEAN PATENT APPLICATION

(11) **EP 1 202 546 A1**
(43) Date of publication of application: **02.05.2002**
(21) Application number: 00309480.2
(22) Date of filing: 27.10.2000
(51) Int. Cl.: H04M 17/02, H04M 17/00, H04Q 7/32

(54) **Communication terminal accomodating SIM cards**

(71) Applicant: BRITISH TELECOMMUNICATIONS public limited company, London EC1A 7AJ (GB)
(72) Inventor: Wilson, Peter David, Ipswich, Suffolk, IP3 8EQ (GB)
(74) Representative: Lidbetter, Timothy Guy Edwin

(57) **Abstract**

A payphone adapted to receive a SIM card from a mobile telephone, such that calls made from the payphone are billed to the mobile telephone account

## Description

This invention relates to the field of fixed-line communications terminals, and in particular to the field of payphones.

Since the mid-1990s, there has been a very significant increase in the number of mobile telephone users; a recent report from Strategy Analytics (Western European Cellular Market Forecast (2000-2005)) indicated that the number of mobile telephone users in Western Europe had risen from 54.6 million by the end of 1997 to 149.2 million by the end of 1999, with a forecast of 325 million users by the end of 2005. Despite their seeming ubiquity, there are still some significant disadvantages which can restrict the users of mobile telephones. Battery lifetimes, despite improvements in battery technology, can still be somewhat limited, especially where a user is not able to re-charge the telephone battery within a building or a vehicle. Additionally, there will be locations where it is not possible to receive a sufficiently strong signal to operate the telephone, for example in rural or mountainous regions, underground railway systems, etc.

According to a first aspect of the present invention there is provided a fixed line communications terminal characterised in that the terminal is adapted to receive a data carrier from a mobile communications terminal. The fixed line communications terminal may be a telephone and is preferably a payphone. Preferably the data carrier from a mobile communications terminal is a subscriber identity module (SIM) card.

The present invention supplies the advantage that even when the battery of the mobile telephone handset has been discharged, or when the user is in an area of a mobile telephone providing a poor signal strength, it is possible for the mobile telephone user to make telephone calls using the SIM card from their mobile telephone handset in conjunction with a payphone according to the present invention, with the cost of the calls being billed to the user's mobile telephone account.

Embodiments of the present invention will now be described in further detail with reference to the accompanying drawings, in which;
Figure 1 is a schematic depiction of a pay-telephone according to the present invention;
Figure 2 is a schematic depiction of the functionality of a pay-telephone according to the present invention; and
Figure 3 is a schematic depiction of the interaction of a payphone network with a mobile telephony network.

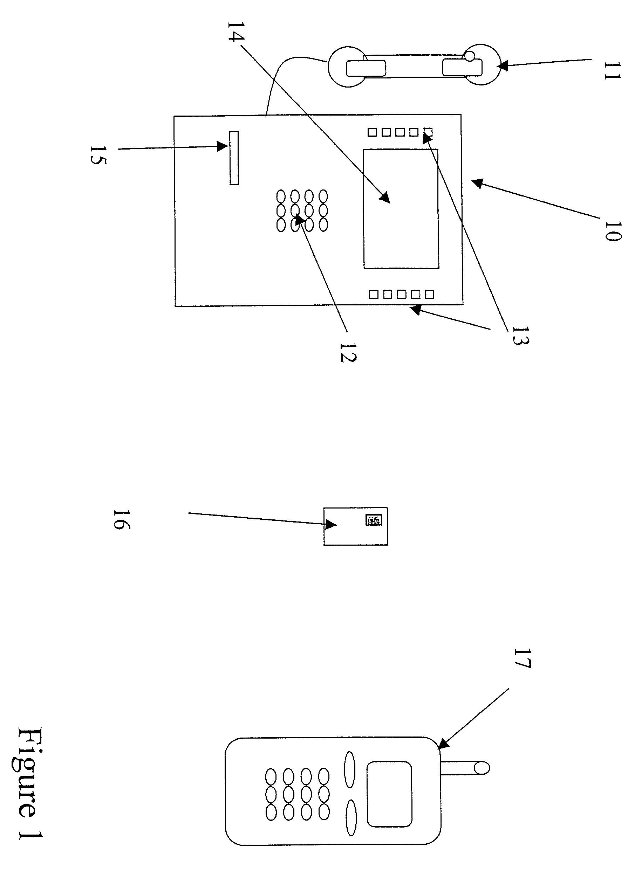

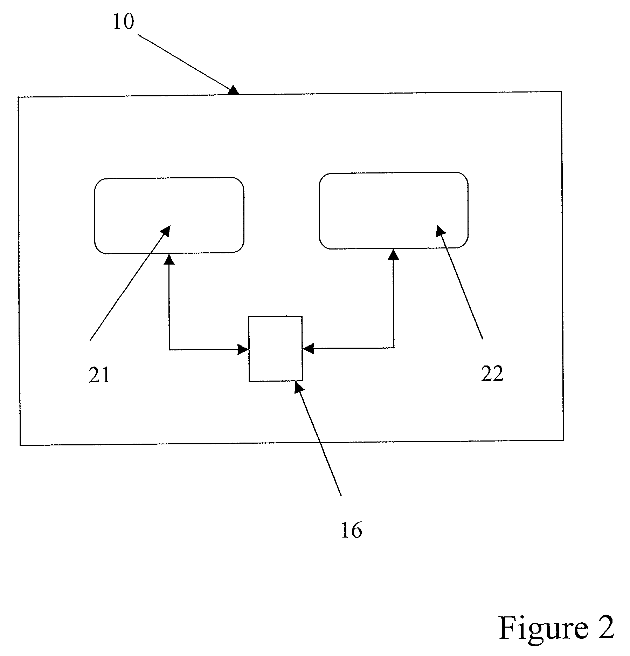

Figure 1 shows a fixed-line payphone 10 according to the present invention. The payphone 10 has all of the functionality commonly found in payphones, such as a handset 11, numeric buttons 12 for dialling numbers and a plurality of function buttons 13 for activating specific functions, such as being connected to the operator or to directory enquiries, etc. Display screen 14 can be used to display information to the user of the payphone, for example the number dialled, value of coins inserted, call time elapsed, credit remaining, etc. The payphone 10 additionally comprises a loading mechanism 15 that enables the payphone to receive a SIM (Subscriber Identity Module) card 16 from a GSM mobile telephone handset 17. The payphone 10 comprises a SIM reading module 21 (see Figure 2) which can extract the relevant user information from the SIM card 16. Thus, when the SIM card 16 is loaded into the payphone 10, the user needs to enter the PIN (Personal Identification Number) in order to 'unlock' the SIM card, as the case when a GSM handset is turned on. This provides a basic level of security so that only the owner of a SIM card may insert it into the payphone 10 and then proceed to unlock the SIM card 16.

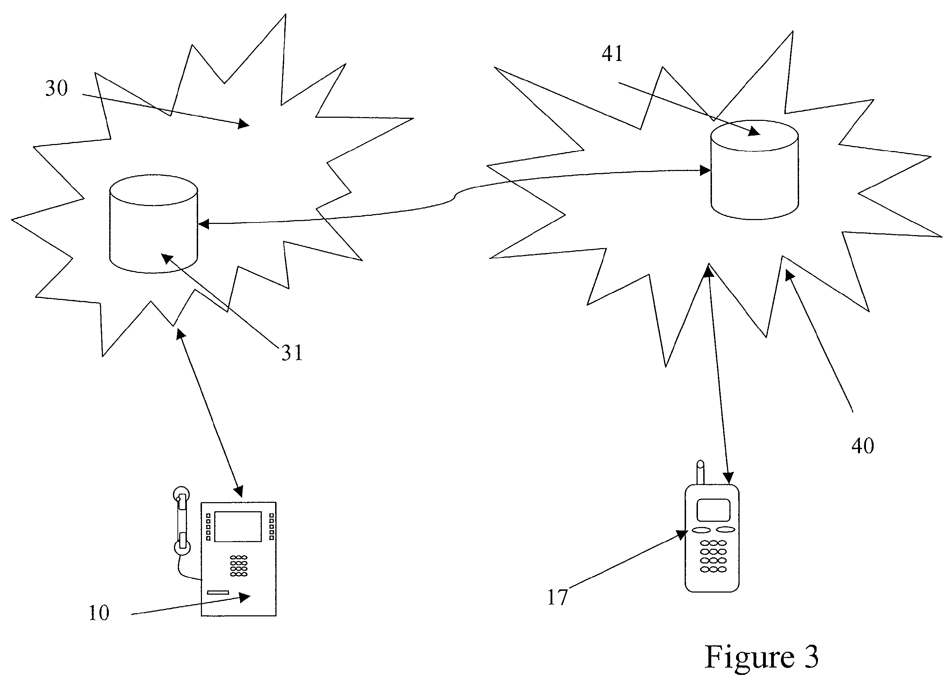

Once the SIM card 16 has been unlocked by the user by entering the PIN using the numeric buttons, the payphone 10 needs to contact the operational support systems (OSSs) 31 that support the payphone network 30 (see Figure 3). These then communicate with the OSSs 41 that support the mobile telephone network 40 that the GSM telephone 17 is registered with. In a process that is analogous to roaming on a further mobile telephone network, the SIM is registered with the payphone network such that telephone calls that are made to the GSM handset 17 are routed to the payphone 10 such that the user can answer the calls. Additionally, any calls that are made from the payphone will be billed to the account of the GSM handset (alternatively, if the GSM handset is a "pay as you go" handset, the cost of the call will be deducted from the credit remaining for the handset) and , if calling line identification is supported then the call will appear to have come from the GSM handset 17 (i.e. the calling line identity presented will be that of the GSM handset 17 when operating on its home network 40). The user of the GSM handset will also be able to access network services, such as voice mail, that can normally be accessed via the mobile handset 17 via the payphone 10 for as long as the SIM card is registered with the payphone network 30. If the function buttons 13 can be dynamically reconfigured by the payphone 10 then one or more of the function buttons 13 could be configured to provide a short-cut to access such network services from the payphone.

With the advent of WAP (Wireless Access Protocol) technology it is possible to access information from the Internet via a GSM mobile telephone. Accordingly, the payphone may additionally comprise a WAP-compatible micro-browser 22 so that the user may access email and/or World Wide Web (WWW) sites, with the display screen 14 being used to display the results with the numeric buttons 12 or the functional buttons being used to control and to navigate within the micro-browser. Alternatively, the display screen 14 may be a touch sensitive screen which can be used for control and site navigation. As WAP-compatible sites (i.e. those encoded using WML [Wireless Mark-up Language]) are designed to display on the screen of a mobile telephone, they are designed to e shown on a small, monochrome screen and thus the display screen 14 of the payphone should be adequate. If the mobile phone has GPRS or UMTS capabilities then, due to the increased bandwidth available, the user may attempt to access a data resource which requires a colour screen or a high-resolution screen to be displayed. In the event that the payphone display screen is not capable of displaying a data resource then the micro-browser 22 must either render the data resource so that it can be displayed on the display screen or return an error message to the user that the resource can not be displayed.

If a mobile telephone user inserts their SIM card into a payphone according to the present invention when travelling abroad then the payphone may detect the state of residence of the user from the network identification data held in the SIM card and may then present audio prompts and screen prompts in the language of the user (or present a prompt if a user is a resident of as state with multiple official or commonly used languages).

User information, such as email identities and passwords and WWW bookmarks that are stored on the SIM card may be accessed by the micro-browser 22 in an analogous manner to the operation of a WAP-enabled GSM mobile telephone.

GSM SIM cards come in two sizes; the larger credit card sized SIM and the smaller size that is now more common with the trend towards smaller handsets. The loading mechanism 15 should be able to accept both types of SIM cards: the loading mechanism might be a sliding tray on top of which a credit card sized SIM card is placed with a depressed region which could accommodate one of the smaller SIM cards; alternatively the smaller SIM cards could be held within a former or frame such that they are presented in the same position that the operative region of a credit card sized SIM card would be, the former or frame being received in a sliding tray or through an aperture (similarly to a floppy disk drive).

The person skilled in the art of mobile telephone networks will be aware of the techniques and processes required to read SIM cards and for the establishment of roaming on a different network from the GSM standards documents.

Although the above discussion has focussed on GSM mobile telephone handsets, it will be clearly understood by a person skilled in the art that the invention is not solely restricted to GSM handsets could be implemented using any mobile communications device that makes use of a SIM card or similar device that has the functionality of a SIM card, for example GPRS-enabled PDAs or other devices, third-generation (3G or UMTS [Universal Mobile Telecommunications System]) mobile handsets, etc.

Similarly, the fixed-line payphone 10 could be any fixed-line telephone; for example a multi-occupancy residency could have a single fixed-line telephone to receive telephone calls and each resident could insert the SIM card from their respective mobile telephone in order to make outgoing calls over the landline telephone, with the cost being billed to their mobile telephone accounts.

## Claims

1. A fixed line communications terminal **characterised in that** the terminal is adapted to receive a data carrier from a mobile communications terminal.

2. A terminal according to claim 1 further **characterised in that** the terminal, in use, reads data from the data carrier.

3. A terminal according to claim 1 or claim 2 wherein the fixed line communications terminal is a telephone.

4. A terminal according to claim 3 wherein the fixed line communications terminal is a payphone.

5. A terminal according to any preceding claim wherein the data carrier from a mobile communications terminal is a subscriber identity module (SIM) card.

6. A payphone adapted to read a mobile telephone SIM card.
